**Europäisches Patentamt**

**European Patent Office**

**Office européen des brevets**

(11) Veröffentlichungsnummer: **0 113 476**
**A2**

(12) **EUROPÄISCHE PATENTANMELDUNG**

(21) Anmeldenummer: **83112982.0**

(22) Anmeldetag: **22.12.83**

(51) Int. Cl.³: **G 06 F 13/00**
**G 11 C 9/06**

(30) Priorität: **05.01.83 DE 3300223**

(43) Veröffentlichungstag der Anmeldung:
**18.07.84 Patentblatt 84/29**

(84) Benannte Vertragsstaaten:
**AT CH DE FR IT LI**

(71) Anmelder: **SIEMENS AKTIENGESELLSCHAFT**
**Berlin und München Wittelsbacherplatz 2**
**D-8000 München 2(DE)**

(72) Erfinder: **Wahr, Alfons-Josef, Dipl.-Inf.**
**Pucher Strasse 52**
**D-8080 Fürstenfeldbruck(DE)**

(54) **Anordnung zur Umwandlung einer virtuellen Adresse in eine physikalische Adresse für einen in Seiten organisierten Arbeits-speicher einer Datenverarbeitungsanlage.**

(57) Bei Datenverarbeitungsanlagen, bei denen Programme mit virtuellen Adressen zulässig sind, ist erforderlich, daß die virtuellen Adressen in physikalische Adressen, mit denen der Arbeitsspeicher der Datenverarbeitungsanlage angesteuert wird, umgewandelt werden. Dabei ist es vorteilhaft, daß der Arbeitsspeicher und der virtuelle Speicher in Seiten eingeteilt ist. Die Umwandlung der virtuellen Adresse (ABV) in die physikalische Adresse (ABR) erfolgt mit Hilfe eines Zuordnungsspeichers (ATM). Dabei wird der niederwertigere Abschnitt (ABV1) der virtuellen Adresse direkt in ein Adressenregister (ADR2) übertragen. Der höherwertigere Abschnitt (ABV2) der virtuellen Adresse wird dem Zuordnungsspeicher (ATM) zugeführt, der den diesem zweiten Abschnitt (ABV2) der virtuellen Adresse zugeordneten zweiten Abschnitt (ABR2) der physikalischen Adresse erzeugt und in das Adressenregister (ADR2) überträgt. Im Adressenregister (ADR2) steht dann die physikalische Adresse für den Arbeitsspeicher. Der Zuordnungsspeicher (ATM) ist derart aufgebaut, daß jeder Seite des virtuellen Speichers jeweils eine Speicherzelle zugeordnet ist, die von dem zweiten Abschnitt (ABV2) der virtuellen Adresse eindeutig adressiert wird. Diese Speicherzelle enthält Speicherelemente für den zweiten Abschnitt (ABR2) der physikalischen Adresse und Speicherelemente für Steuerinformationen (SI), die angeben, ob auf die adressierte Seite im Arbeitsspeicher zugegriffen werden darf oder nicht. Diese Steuerinformationen (SI) werden von einer Steuerschaltung (ST I) ausgewertet, die ein Ausgangssignal (M I) abgibt, wenn auf die adressierte Seite nicht zugegriffen werden darf.

FIG 2

SIEMENS AKTIENGESELLSCHAFT
Berlin und München

Unser Zeichen
VPA 83 P 1002 E

**0113476**

Anordnung zur Umwandlung einer virtuellen Adresse in eine physikalische Adresse für einen in Seiten organisierten Arbeitsspeicher einer Datenverarbeitungsanlage

Die Erfindung bezieht sich auf eine Anordnung zur Umwandlung einer virtuellen Adresse in eine physikalische Adresse für einen in Seiten organisierten Arbeitsspeicher einer Datenverarbeitungsanlage, bei dem ein erster Abschnitt der physikalischen Adresse für den Arbeitsspeicher aus einem niederwertigeren ersten Abschnitt der virtuellen Adresse direkt und ein zweiter Abschnitt der physikalischen Adresse aus einer mit Hilfe des zweiten Abschnitts der virtuellen Adresse adressierten Seitentabelle gewonnen wird und bei der durch eine Steuerschaltung aus Steuerinformationen festgestellt wird, ob die adressierte Seite im Arbeitsspeicher enthalten ist.

Die Verwendung von virtuellen Speichern bei Datenverarbeitungsanlagen ist bekannt (z.B. Lexikon der Datenverarbeitung, 1982, Verlag Moderne Industrie München, Stichwort virtueller Speicher). Bei derartigen virtuellen Speichern besteht das Problem, die virtuellen Adressen in physikalische Adressen für den Arbeitsspeicher der Datenverarbeitungsanlage umzuwandeln. Dabei wird sowohl der Arbeitsspeicher als auch der virtuelle Speicher in Seiten organisiert, wobei jede Seite eine bestimmte Anzahl von Speicherstellen enthält. Die virtuelle Adresse kann derart aufgebaut sein, daß ein erster niederwertigerer Abschnitt die Speicherstelle in der Seite angibt, während der zweite, höherwertigere Abschnitt die Seitennummer bezeichnet. Die physikalische Adresse für den Arbeitsspeicher kann dann auf folgende Weise gewonnen werden: Der niederwertigere Abschnitt der virtuellen Adresse wird direkt zum niederwer-

Il 1 The - 22.12.1982

tigeren Abschnitt der physikalischen Adresse. Der höherwertigere zweite Abschnitt der virtuellen Adresse wird dagegen einer sog. Seitentabelle als Adresse zugeführt. Aus
der Seitentabelle wird mit Hilfe dieser Adresse der zweite,
höherwertigere Abschnitt der physikalischen Adresse gewonnen und zum ersten Abschnitt der physikalischen Adresse hinzugefügt. Mit der auf diese Weise gewonnenen physikalischen
Adresse kann dann der Arbeitsspeicher adressiert werden. Ergibt sich, daß die adressierte Seite noch nicht im Arbeitsspeicher enthalten ist, dann muß diese Seite zunächst von
einem anderen Speicher, z.B. einem Hintergrundspeicher, in
den Arbeitsspeicher gebracht werden und der zweite Abschnitt
der physikalischen Adresse des Arbeitsspeichers, unter der
die Seite abgespeichert worden ist, in die Seitentabelle
eingetragen werden. Ein erneuter Zugriff zum Arbeitsspeicher
mit Hilfe der virtuellen Adresse kann dann ausgeführt werden. Das Prinzip des virtuellen Speichers, seine Verwendung
bei der Programmierung und die Umsetzung der verwendeten virtuellen Adressen in physikalische Adressen für den Arbeitsspeicher ist bekannt und wird deshalb nicht weiter erläutert.

Wie bereits erläutert, wird zur Umsetzung der virtuellen
Adresse in die physikalische Adresse eine Seitentabelle verwendet, für die z.B. ein besonderer Speicher vorgesehen sein
kann. Gewöhnlich wird hierfür ein assoziativer Speicher verwendet, in dem nicht alle Adressen der Seiten des virtuellen
Adreßraums enthalten sind, sondern nur diejenigen Seitenadressen, die bei einen laufenden Programm oder bei laufenden Programmen/verwendet werden. Wird in einem laufenden Programm eine Seite angesprochen, die noch nicht in der Seitentabelle enthalten ist, wird zunächst die entsprechende Information in die Seitentabelle eingetragen und/die zugeordnete Seite in den Arbeitsspeicher übertragen. Erst jetzt
kann auf diese Seite zugegriffen werden. Es ist somit eine
Steuerschaltung erforderlich, die feststellt, ob eine bei der Bearbeitung eines Programms angesprochene Seite bereits im Arbeitsspeicher steht, also die zur Umwandlung der virtuellen Adresse in die physikalische Adresse erforderliche Eintragung in der Seitentabelle enthalten ist. Da nicht für alle Seiten des virtuellen Adressenraums eine Speicherzelle des als Seitentabelle verwendeten Zuordnungsspeichers vorhanden ist, also jede Speicherzelle des Zuordnungsspeichers verschiedenen Seiten zugeordnet wird, beträgt die Trefferate beim Ablauf von Programmen ca. 98%. Die Trefferrate gibt die Anzahl der Fälle an, bei denen bei einem Programmlauf die zur Umwandlung der virtuellen Adresse in die physikalische Adresse erforderliche Eintragung in der Seitentabelle bereits vorhanden ist, also eine Änderung der Seitentabelle und des Arbeitsspeichers nicht erforderlich ist.

Die der Erfindung zugrundeliegende Aufgabe besteht darin, eine Anordnung zur Umwandlung einer virtuellen Adresse in eine physikalische Adresse anzugeben, bei der die Trefferrate noch höher liegt und noch weitere den Zugriff zum Arbeitsspeicher regelnde Steuerinformationen bei der Anordnung verwendet werden können, ohne daß der Aufwand sehr viel grösser wird. Diese Aufgabe wird bei einer Anordnung der eingangs angegebenen Art dadurch gelöst, daß ein Zuordnungsspeicher vorgesehen ist, der pro Seite des virtuellen Adressenraums eine Speicherzelle aufweist, die Speicherelemente zur Aufnahme der dem zweiten Abschnitt der virtuellen Adresse entsprechenden zweiten Abschnitt der physikalischen Adresse und Speicherelemente zur Aufnahme von den Zugriff zu der zugeordneten Seite regelnden Steuerinformationen für die Steuerschaltung aufweist, und daß jeder Speicherzelle eine aus dem zweiten Abschnitt der virtuellen Adresse bestehende Adresse eindeutig zugeordnet ist.

Die Steuerschaltung ist vorteilhafterweise einerseits mit den Speicherelementen für die Steuerinformationen des Zuordnungsspeichers, andererseits mit zu einem Prozessor der Datenverarbeitungsanlage führenden Steuerleitungen verbunden, so daß sie Steuerinformationen in der adressierten Speicherzelle im Zuordnungsspeicher teils mit Signalen auf den Steuerleitungen vergleichen kann, teils deren Zustand feststellen kann und in Abhängigkeit dieser Auswertung ein Signal erzeugen kann, wenn die adressierte Seite nicht im Arbeitsspeicher steht oder zu der adressierten Seite nicht zugegriffenwerden darf.

Für den Fall, daß für eine Mehrzahl von Seiten dieselben Steuerinformationen verwendet werden können, ist es vorteilhaft, wenn der Zuordnungsspeicher einen weiteren Teil aufweist, in dem jeweils die mehreren Seiten gemeinsamen Steuerinformationen in einer Speicherzelle zusammengefaßt sind und an de ein Teil des zweiten Abschnitts der virtuellen Adresse zur Adressierung anliegt.

Die erfindungsgemäße Anordnung hat folgende Vorteile: Die Schaltung kann mit wenigen, handelsüblichen TTL-Schaltkreisen realisiert werden; sie ist damit kostengünstig im Aufbau und der Wartung; wegen der hohen Integrationsdichte der Bausteine wird wenig Platz für die Anordnung benötigt; es wird weniger Leistung verbraucht; aufgrund der wenigen Bauteiledurchläufe beim Betrieb der Anordnung ergibt sich eine gesamte Durchlaufzeit, die ECL-Lösungen nicht nachsteht; der Zellenbelegungsfaktor des Zuordnungsspeichers beträgt nun 1, d.h. ein einmal errechneter Eintrag im Zuordnungsspeicher wird während der Durchführung eines Programms nicht mehr überschrieben.Damit steigt die Trefferrate auf ca. 99%.

Anhand eines Ausführungsbeispiels, das in den Figuren dargestellt ist, wird die Erfindung weiter erläutert.

Es zeigen

Fig. 1 ein Blockschaltbild einer Datenverarbeitungsanlage bei Verwendung der erfindungsgemäßen Anordnung,

Fig. 2 ein Blockschaltbild der erfindungsgemäßen Anordnung,

Fig. 3 ein Schaltbild der erfindungsgemäßen Anordnung.

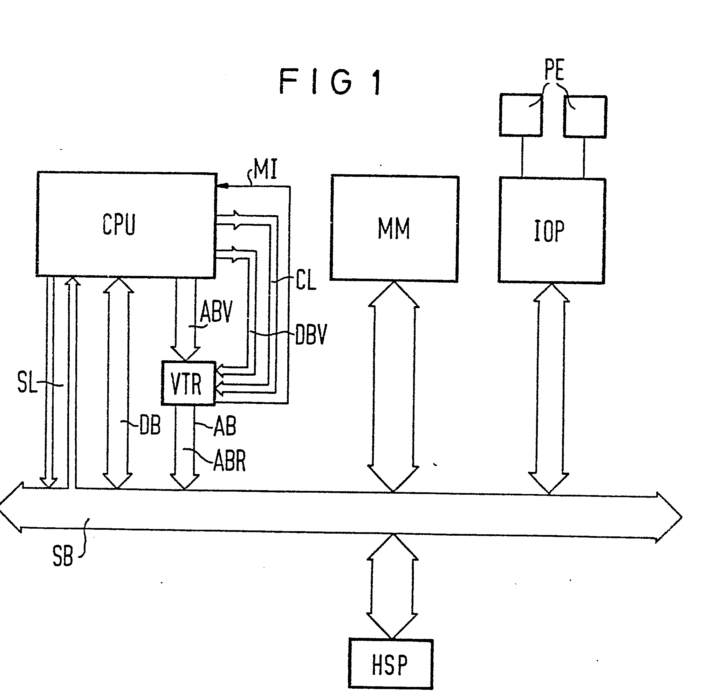

Das Datenverarbeitungssystem nach Fig. 1 enthält als wesentliche Funktionseinheiten einen Prozessor CPU, einen Arbeitsspeicher MM und einen Ein/Ausgabeprozessor IOP. Diese Funktionseinheiten sind über einen Systembus SB miteinander verbunden. An den Systembus SB können noch weitere Funktionseinheiten eines Datenverarbeitungssystems angeschlossen werden. Der Prozessor CPU ist über Steuerleitungen SL und einem Datenbus DB direkt mit dem Systembus SB verbunden. Im Adreßbus AB vom Prozessor SPU ist dagegen eine Zuordnungsschaltung VTR angeordnet, mit deren Hilfe die vom Prozessor CPU abgegebenen virtuellen Adressen ABV in physikalische Adressen ABR umgewandelt werden können. Die Zuordnungsschaltung VTR ist mit dem Prozessor CPU über Steuerleitungen CL und Datenleitungen DBV verbunden. Im Systembus SB sind der Datenbus DB, der Adreßbus AB und die Steuerleitungen SL zusammengefaßt. Mit Hilfe des Ein/Ausgabeprozessors IOP wird eine Verbindung zwischen dem Systembus SB und peripheren Einheiten PE hergestellt.

Die Zuordnungsschaltung VTR, mit deren Hilfe virtuelle Adressen in physikalische Adressen umgewandelt werden können, kann auch an anderer Stelle, als in Fig. 1 gezeigt, angeordnet werden. Z.B. könnte die Zuordnungsschaltung VTR vor dem Arbeitsspeicher MM angeordnet sein.

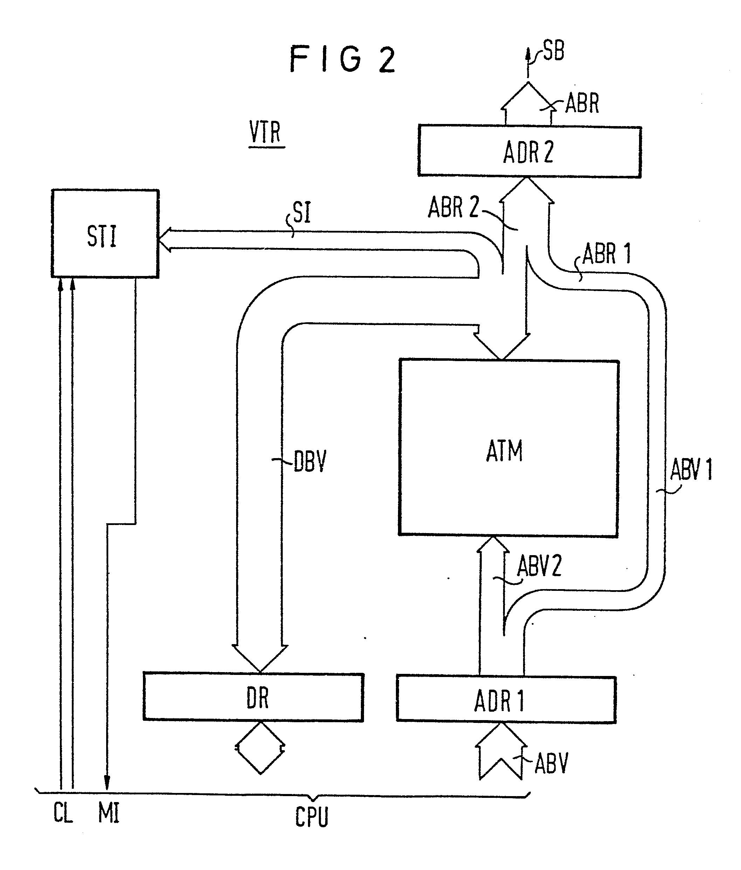

Fig. 2 zeigt ein Blockschaltbild der Zuordnungsschaltung VTR. Die virtuelle Adresse ABV wird in ein erstes Adreßregister ADR1 eingespeichert. Von dort gelangt ein erster Abschnitt der virtuellen Adresse ABV, und zwar der niederwertigere Abschnitt ABV 1, direkt in ein zweites Adreßregister ADR 2, in dem die physikalische Adresse zusammengesetzt wird. Aus dem ersten Abschnitt ABV1 der virtuellen Adresse wird somit der erste Abschnitt ABR1 der physikalischen Adresse. Der zweite Abschnitt ABV2 der virtuellen Adresse, und zwar der höherwertigere, wird einem Zuordnungsspeicher ATM zugeführt. Mit Hilfe des zweiten Abschnitts ABV2 der virtuellen Adresse wird der Zuordnungsspeicher ATM adressiert und der diese Adresse entsprechende Inhalt des Zuordnungsspeichers ausgelesen. Dieser Inhalt enthält den zweiten Abschnitt, den höherwertigeren Abschnitt der physikalischen Adresse ABR2 und zusätzliche Steuerinformationen SI, die einer Steuerschaltung STI zugeführt werden. Der zweite Abschnitt ABR2 der physikalischen Adresse wird dem Adreßregister ADR2 zugeführt, so daß nunmehr die physikalische Adresse ABR bestehend aus dem Abschnitt ABR1 und dem Abschnitt ABR2 im Adressenregister enthalten ist. Aus dem Adreßregister ADR2 kann dann die physikalische Adresse ABR entnommen werden und über den Systembus SB den übrigen Funktionseinheiten des Datenverarbeitungssystems zugeführt werden.

Der Inhalt des Zuordnungsspeichers ATM wird vom Prozessor CPU geladen und zwar über den Bus DBV. Über diesen Bus DBV kann auch der Inhalt des Zuordnungsspeichers ATM vom Prozessor gelesen werden. In dem Bus DBV kann ein Datenregister DR angeordnet sein.

Die Steuerschaltung STI wertet die Steuerinformationen SI aus dem Zuordnungsspeicher ATM aus. Dabei vergleicht sie teilweise die Steuerinformationen SI mit Informationen, die über Steuerleitungen CL vom Prozessor CPU geliefert werden, teils wertet sie die Steuerinformationen SI lediglich aus. Mit Hilfe der Steuerinformationen SI kann die Steuerschaltung STI feststellen, ob zu einer adressierten Information im Arbeitsspeicher MM zugegriffen werden darf oder nicht. Wenn zu dieser Information nicht zugegriffen werden darf, z.B. weil sie noch nicht im Arbeitsspeicher MM ge-

0113476

speichert ist, gibt die Steuerschaltung STI ein Signal MI
am Ausgang ab. Dieses Signal MI wird vom Prozessor CPU ausgewertet, der z.B. im angegebenen Fall die angesprochene
Seite in den Arbeitsspeicher MM lädt und den Zuordnungsspeicher ATM entsprechend einstellt.

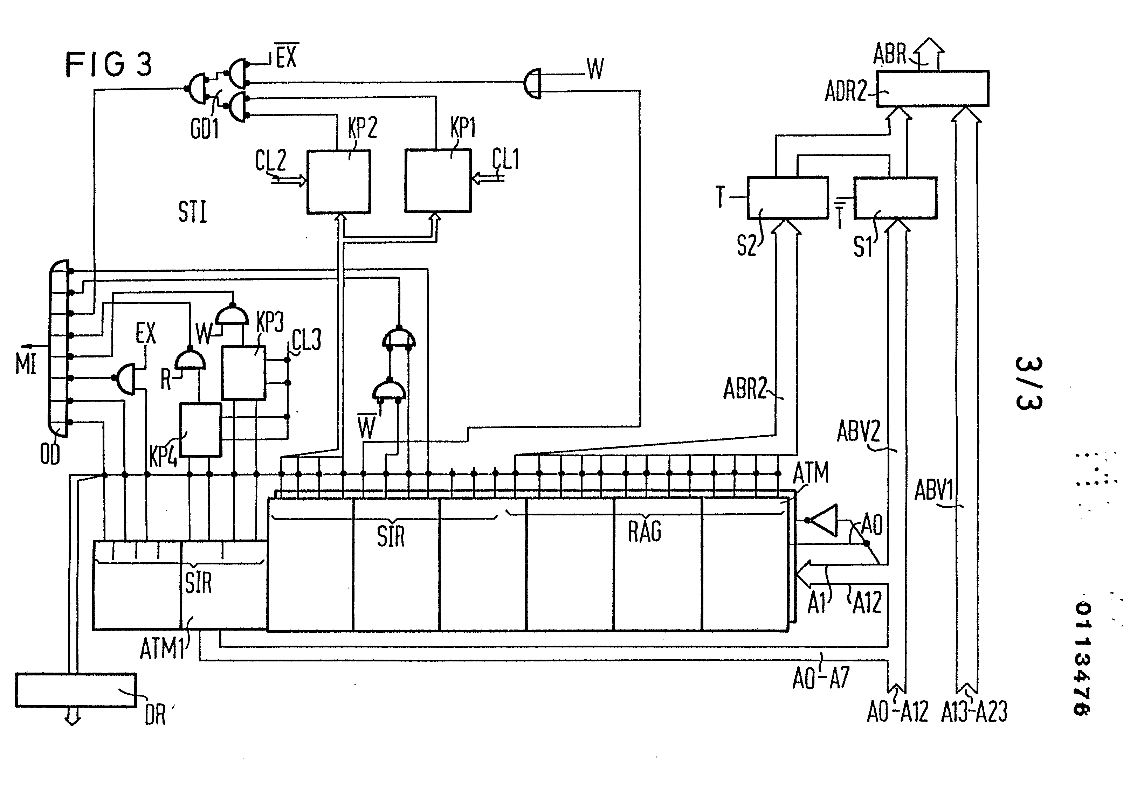

Die Realisierung des Blockschaltbildes der Figur 2 ist der
Figur 3 zu entnehmen. Der erste Abschnitt ABV1 der virtuellen Adresse wird dem Adreßregister ADR2 direkt zugeführt.
Der zweite Abschnitt ABV2 der virtuellen Adresse wird an
den Zuordnungsspeicher ATM angelegt. Dazu werden z.B. die
Adreßstellen A0 bis A12 verwendet, während z.B. die Adreßstellen A13 bis A23 direkt in das Adressenregister ADR2 übertragen werden.

Der Zuordnungsspeicher ATM ist nun so aufgebaut, daß jeder
Seite im virtuellen Adressenraum jeweils eine Speicherzelle
zugeordnet ist, die eindeutig von einer Adresse adressiert
wird, die aus den zweiten Abschnitt ABV2 besteht. Die Speicherzelle enthält somit soviel Speicherelemente, wie der
zweite Abschnitt ABR2 der physikalischen Adresse Stellen hat.
Weiterhin enthält jede Speicherzelle im Zuordnungsspeicher
ATM Speicherelemente für die Steuerinformationen SI. Mit
der Adressierung einer Speicherzelle zur Umwandlung einer
virtuellen Adresse in eine physikalische Adresse werden somit gleichzeitig die Speicherelemente mit den zugehörigen
Steuerinformationen SI adressiert. Die Speicherelemente jeder Speicherzelle zur Umwandlung der virtuellen Adresse in
die physikalische Adresse ABR2 sind in Figur 3 mit RAG bezeichnet, die Speicherelemente für die Steuerinformationen
mit SI.

Tritt bei einem Programmlauf z.B. eine bestimmte virtuelle
Adresse ABV auf, dann muß die dieser virtuellen Adresse ABV
zugeordnete physikalische Adresse ABR für den Arbeitsspeicher MM erzeugt werden, um den unter dieser physikalischen Adresse im Arbeitsspeicher MM abgespeicherte Information bearbeiten zu können. Um die physikalische Adresse ABR zu erzeugen, werden die Adressenstellen A13 bis A23 der virtuellen Adresse (erster Abschnitt ABV1 der virtuellen Adresse) direkt in das Adreßregister ADR2 übertragen. Der zweite Abschnitt ABV2 der virtuellen Adresse aber dient dazu, um den Zuordnungsspeicher ATM zu adressieren. Diesem zweiten Abschnitt ABV2 der virtuellen Adresse ist dabei eindeutig eine der Speicherzellen des Zuordnungsspeichers ATM zugeordnet. Diese wird mit den Adressenstellen A0 bis A12 adressiert und ausgewählt. Der Zuordnungsspeicher ATM gibt an den Ausgängen RAG den zweiten Abschnitt ABR2 der physikalischen Adresse ab, der in das Adressenregister ADR2 übertragen wird. Gleichzeitig gibt der Zuordnungsspeicher ATM die dieser Adresse zugeordneten Steuerinformationen SI an die Steuerschaltung STI ab, die diese auswertet. Im Adressenregister ADR2 steht somit die physikalische Adresse für den Arbeitsspeicher MM. Wenn die Steuerschaltung STI durch Auswertung der Steuerinformationen SI feststellt, daß auf den Arbeitsspeicher MM zugegriffen werden kann, wird die physikalische Adresse vom Adressenregister ADR2 über den Systembus SB dem Arbeitsspeicher MM zugeführt und ausgewertet.

Nach Figur 3 kann der zweite Abschnitt ABV2 der virtuellen Adresse auch direkt in das Adressenregister ADR2 übertragen werden. Dazu ist ein Bus vorgesehen, in dem ein Schalter S1 angeordnet sein kann. Entsprechend ist in die Leitung vom Zuordnungsspeicher ATM zum Adressenregister ADR2 ein Schalter S2 angeordnet. Durch Anlegen eines Schaltsignals T kann einer der Schalter S1 bzw. S2 durchlässig geschaltet werden.

In den Speicherzellen des Zuordnungsspeichers ATM können z.B. folgende Steuerinformationen gespeichert sein: Eine Angabe darüber, ob die adressierte Seite bereits im Arbeitsspeicher MM gespeichert ist; eine Angabe, ob die zugeordnete Speicherstelle im Arbeitsspeicher geändert worden ist
oder nicht; einen Speicherschlüssel, aus dem entnommen werden kann, ob die Speicherzellen des Zuordnungsspeichers ATM
dem gerade laufenden Programm zugeordnet sind oder einem
anderen Programm usw..

Für den Fall, daß mehreren Speicherzellen des Zuordnungsspeichers ATM und damit mehreren Seiten des virtuellen Adressenraums dieselben Steuerinformationen zugeordnet werden,
kann zur Einsparung von Speicherelementen der Zuordnungsspeicher ATM um einen weiteren Speicher ATM1 erweitert werden, in dem die mehreren Seiten zugeordneten Steuerinformationen enthalten sind. Dieser weitere Speicher ATM1 wird z.B.
von den Adreßstellen A0 bis A7 des zweiten Abschnitts ABV2
der virtuellen Adresse angesteuert. Die in dem weiteren
Speicher ATM1 enthaltenen Steuerinformationen können z.B.
sein: Eine Angabe, ob auf die Seiten zugegriffen werden
darf; eine Angabe, ob die entsprechenden Seiten überhaupt
definiert sind; eine Angabe über die Priorität der zugeordneten Seiten beim Lesen; eine Angabe über die Priorität der
entsprechenden Seiten beim Schreiben usw..

Die Steuerinformationen SI, die entweder im Zuordnungsspeicher ATM oder im weiteren Speicher ATM1 stehen und die
jeweils beim Adressieren einer Speicherzelle des Zuordnungsspeichers ATM bei der Adressenwandlung ausgelesen werden,
werden von der Steuerschaltung STI ausgewertet. Diese stellt
fest, ob auf dem Arbeitsspeicher MM zugegriffen werden darf.
Ist dies nicht der Fall, dann gibt die Steuerschaltung STI
ein Signal MI am Ausgang ab.

Die Steuerschaltung STI vergleicht z.B. einen Teil der
Steuerinformationen SI mit vom Prozessor über Steuerleitungen CL gelieferten Informationen. Dazu weist sie Komparatoren KP auf. Mit Hilfe der Komparatoren KP kann z.B.

festgestellt werden, ob der Speicherschlüssel im Zuordnungsspeicher ATM mit dem Speicherschlüssel übereinstimmt, der
vom Prozessor CPU abgegeben wird. Ein entsprechender Speicherschlüssel kann z.B. über die Steuerleitungen CL1 an den
Komparator KP1 angelegt werden, der die Gleichheit der zugeordneten Steuerinformationen SI im Zuordnungsspeicher ATM
feststellt. Es kann auch festgestellt werden, z.B. mit Hilfe
des Komparators KP2, ob die Speicherelemente für den Speicherschlüssel im Zuordnungsspeicher ATM logisch 0 sind. Dazu kann
z.B. über eine Steuerleitung CL2 vom Prozessor CPU ein entsprechendes Signal zugeführt werden. Mit Hilfe von Komparatoren KP3 und KP4 kann festgestellt werden, ob die Steuerinformationen SI für die Priorität beim Schreiben und beim
Lesen mit der vom Prozessor CPU über Steuerleitungen CL3 abgegebenen Prioritäten übereinstimmt. Die Ausgangssignale von
den Komparatoren KP3 bzw. KP4 werden mit Hilfe eines Schreibsignals W bzw. eines Lesesignals R zu einem ODER Glied OD
übertragen. Entsprechend werden die Ausgänge der Komparatoren KP1 und KP2 über eine Gatterschaltung GD1 zusammengefaßt und dem ODER Glied OD zugeführt. Der Gatterschaltung
GD1 können als weitere Steuersignale das Schreibsignal W
und ein Signal EX zur Befehlsausführung zugeführt werden.
Mit Hilfe einer Steuerinformation SI aus dem Zuordnungsspeicher ATM wird dabei festgelegt, ob der Speicherschlüssel
auch beim Lesen überprüft werden soll oder nicht.

Weitere Steuerinformationen, die im Zuordnungsspeicher ATM
oder im weiteren Speicher ATM1 enthalten sind, werden von der
Steuerschaltung STI lediglich ausgewertet. Dies sind die
Steuerinformationen, die angeben, ob die adressierte Seite
im Arbeitsspeicher MM bereits enthalten ist oder nicht, ob
auf die Seite zugegriffen werden darf oder nicht usw.. Dazu
sind die entsprechenden Speicherelemente der Speicherzelle
im Zuordnungsspeicher ATM bzw. im weiteren Speicher ATM1
entweder direkt mit der ODER Schaltung OD oder über logische Glieder mit dem ODER Glied OD verbunden.

Am Ausgang des ODER Gliedes OD wird ein Signal MI abgegeben, wenn die Auswertung der Steuerinformationen SI oder
der Vergleich der Steuerinformationen SI mit Steuerinformationen vom Prozessor CPU ergibt, daß auf die Seite, die
von der virtuellen Adresse angesprochen wird, nicht zugegriffen werden darf. In diesem Falle wird durch das Signal
MI die weitere Ausführung des Programms unterbrochen. Wenn
z.B. die adressierte Seite nicht im Arbeitsspeicher MM steht,
dann wird der Prozessor CPU dazu veranlaßt, die entsprechende
Seite z.B. von einem Hintergrundspeicher, HSP der in Figur 1
dargestellt ist, in den Arbeitsspeicher MM zu übertragen.
Wenn dies geschehen ist, ändert der Prozessor CPU die entsprechende Steuerinformation SI im Zuordnungsspeicher ATM.
Wenn jetzt erneut der Befehl, mit dem auf diese Seite zugegriffen werden soll, zur Ausführung ansteht, wird bei der
Umsetzung der virtuellen Adresse in die physikalische Adresse
kein Signal MI mehr am Ausgang der Steuerschaltung ST I abgegeben und damit die mit der physikalischen Adresse adressierte Speicherzelle im Arbeitsspeicher MM adressiert und
ausgelesen.

In Figur 3 besteht der Zuordnungsspeicher ATM aus zwei
Speicherebenen, die mit Hilfe des Adreßsignals AO ausgewählt
werden. Bei einem kleineren Speicher ATM ist eine derartige
Aufteilung nicht erforderlich. Bei einem größeren Speicher
ATM können doch weitere Speicherebenen hinzugefügt werden.

Die Schaltung nach Figur 3 besteht aus handelsüblichen
TTL Bausteinen und ist somit billig im Aufbau.

3 Patentansprüche
3 Figuren

Bauteileliste

Zuordnungsspeicher ATM: AM 9168
Weiterer Speicher ATM 1: AM 93422
Schalter S1, S2: Sn 74f 241
Komparatoren KP: Sn74f 521

Patentansprüche

1. Anordnung zur Umwandlung einer virtuellen Adresse in eine physikalische Adresse für einen in Seiten organisierten Arbeitsspeicher einer Datenverarbeitungsanlage, bei dem ein erster Abschnitt der physikalischen Adresse für den Arbeitsspeicher direkt aus einem ersten niederwertigeren Abschnitt der virtuellen Adresse und ein zweiter Abschnitt der physikalischen Adresse aus einer mit Hilfe des zweiten Abschnitts der virtuellen Adresse adressierten Seitentabelle gewonnen wird und bei der durch eine Steuerschaltung aus Steuerinformationen festgestellt wird, ob die adressierte Seite im Arbeitsspeicher enthalten ist, dadurch  g e - k e n n z e i c h n e t  , daß ein Zuordnungsspeicher (ATM) vorgesehen ist, der pro Seite des virtuellen Adressenraums eine Speicherzelle aufweist, die Speicherelemente zur Aufnahme der dem zweiten Abschnitt (ABV2) der virtuellen Adresse (ABV) entsprechenden zweiten Abschnitt (ABR2) der physikalischen Adresse (ABR) und Speicherelemente zur Aufnahme von den Zugriff zu der zugeordneten Seite regelnden Steuerinformationen (SI) für die Steuerschaltung (STI) aufweist, und daß jeder Speicherzelle eine aus dem zweiten Abschnitt (ABV2) der virtuellen Adresse bestehende Adresse eindeutig zugeordnet ist.

2. Anordnung nach Anspruch 2, dadurch  g e k e n n - z e i c h n e t  , daß die Steuerschaltung (STI) einerseits mit den Speicherelementen für die Steuerinformationen (SI) des Zuordnungsspeichers (ATM), anderseits mit zu einem Prozessor (CPU) führenden Steuerleitungen (CL) verbunden ist, daß sie Steuerinformationen in der adressierten Speicherzelle des Zuordnungsspeichers (ATM) teils mit Signalen auf den Steuerleitungen (CL) vergleicht und teils den Zustand der Steuerinformationen im Zuordnungsspeicher (ATM) feststellt und am Ausgang ein Signal (MI) erzeugt, wenn die adressierte Seite nicht im Arbeitsspeicher (MM) steht oder
zu der adressierten Seite nicht zugegriffen werden darf.

3. Anordnung nach Anspruch 1 oder 2, dadurch  g e  -
k e n n z e i c h n e t  , daß der Zuordnungsspeicher (ATM)
einen weiteren Teil (ATM1) aufweist, in dem jeweils die
mehreren Seiten gemeinsamen Steuerinformationen in einer
Speicherzelle zusammengefaßt sind und an dem ein Teil des
zweiten Abschnitts (A0 bis A 7 ) der virtuellen Adresse zur
Adressierung anliegt.

FIG 1

0113476

FIG 2

FIG 3

3/3

011 3476